(19) Europäisches Patentamt

European Patent Office

Office européen des brevets

(11) Veröffentlichungsnummer: **0 299 438 B1**

# (12) EUROPÄISCHE PATENTSCHRIFT

(45) Veröffentlichungstag der Patentschrift: **30.09.92**

(51) Int. Cl.⁵: **B32B 27/02**, B32B 27/12, B32B 7/02, B32B 5/08, B29C 61/06

(21) Anmeldenummer: **88111152.0**

(22) Anmeldetag: **12.07.88**

(54) **Wärmeschrumpfbare Umhüllung und Verfahren zur Herstellung.**

(30) Priorität: **15.07.87 DE 3723396**

(43) Veröffentlichungstag der Anmeldung:
**18.01.89 Patentblatt 89/03**

(45) Bekanntmachung des Hinweises auf die
Patenterteilung:
**30.09.92 Patentblatt 92/40**

(84) Benannte Vertragsstaaten:
**AT BE CH DE FR GB IT LI NL SE**

(56) Entgegenhaltungen:
**EP-A- 0 115 905**
**EP-A- 0 117 026**

(73) Patentinhaber: **RXS Schrumpftechnik-Garnituren GmbH**
**Profilstrasse 4**
**W-5800 Hagen 1(DE)**

(72) Erfinder: **Will, Horst K.**
**Tiefendorfer Strasse 23**
**W-5800 Hagen1(DE)**

(74) Vertreter: **Fuchs, Franz-Josef, Dr.-Ing. et al**
**Postfach 22 13 17**
**W-8000 München 22(DE)**

## Beschreibung

Die Erfindung betrifft eine wärmeschrumpfbare Umhüllung mit einer schrumpffähigen Komponente, die in einer nicht schrumpffähigen Komponente angeordnet ist.

Schrumpfbare Gewebe werden beispielsweise in der europäischen Anmeldeschrift 0 117 026 beschrieben. Dort werden schrumpfbare Gewebe verwendet, die in einem nicht schrumpfbaren Material eingebettet sind. Um eine höhere mechanische Festigkeit zu erreichen, sind dort neben den schrumpfbaren Gewebefäden auch nicht schrumpfbare, wärmebeständige Fäden eingelegt, zum Beispiel Glasfasern. Derartige Zusatzelemente sind jedoch mit den verwendeten Kunststoffmaterialien wenig kompatibel, so daß sich zum Beispiel Hohlräume ausbilden können oder es erfolgt Wasseraufnahme durch Kapillarwirkung entlang dieser Einlagerungen. Zum anderen ist der Gewebeaufbau dieser verstärkten Folie nicht unbedingt sicher gegen Einreißen bzw. Weiterreißen bei unsachgemäßer Behandlung.

Es ergibt sich für vorliegende Erfindung die Aufgabe, eine wärmeschrumpfbare Umhüllung zu schaffen, bei der die einzelnen Komponenten miteinander kompatibel sind und die dementsprechend bezüglich der gegenseitigen Haftung und der daraus resultierenden Festigkeit so gefestigt sind, daß die Gefahr eines Ein- bzw. Weiterreißens weitgehend behoben ist. Die gestellte Aufgabe wird gemäß der Erfindung durch eine wärmeschrumpfbare Umhüllung der eingangs erläuterten Art dadurch gelöst, daß die schrumpfbare Komponente aus einem vernetzten Polymer besteht und in Netzform ausgebildet und schließlich geweitet ist, wobei die in der aus einem Polymer bestehenden, nicht schrumpffähigen Komponente eingelagerten Netzfadenelemente der einzelnen Netzmaschen in den Kreuzungspunkten unlösbar miteinander verbunden sind.

Bevorzugte Ausgestaltungen der erfindungsgemäßen Umhüllung sind den abhängigen Ansprüchen zu entnehmen.

Weiterhin ergibt sich die Aufgabe, Verfahren zur Herstellung einer solchen Umhüllung zu finden. Diese gestellte Aufgabe wird mit Verfahren gemäß der Ansprüche 23 und 24 gelöst.

Bei der wärmeschrumpfbaren Umhüllung gemäß der Erfindung ergeben sich nun gegenüber dem Stand der Technik wesentliche Verbesserungen und Vorteile bezüglich der Einreiß- bzw. Weiterreißfestigkeit, bezüglich der Elastizität und Flexibilität, sowie bezüglich der Festigkeit ganz allgemeiner Art. So ergibt sich beispielsweise bei einer solchen Umhüllung auch eine Verbesserung der Kaltschlagzähigkeit, der Öl- und Lösungsmittelbeständigkeit, sowie auch der Abriebfestigkeit.

Diese Eigenschaften ergeben sich zum einen durch die entsprechende Wahl der Materialien und zum anderen durch die Gestaltung der schrumpfenden Komponente in Form einer festen Netzstruktur.

So wird beispielsweise als Hauptkomponente des Compounds für die nicht schrumpfbare Komponente der Umhüllung ein thermoplastischer, nicht strahlenvernetzbarer Polyätheresterelastomer verwendet, wobei noch andere, hierfür im wesentlichen nicht maßgebliche Beimengungen aus anderen Materialien enthalten sein können. Diesem Compound werden beispielsweise auch zur Hauptkomponente voll kompatible Kunststoffharze, zum Beispiel Ethylenvinylacetat, in unterschiedlichen Mengenanteilen als strahlenvernetzbare Komponente beigemischt, wodurch die Wärmebeständigkeit entsprechend den Erfordernissen eingestellt wird.

Für eine weitere, zusätzliche mechanische Verstärkung können zusätzliche, faserartig ausgebildete Elemente eingebracht werden, die ebenfalls gemäß der Erfindung aus Materialien bestehen, die zur Hauptkomponente kompatibel sind, das heißt, daß sie chemisch ähnlich aufgebaut sind wie die Hauptkomponente selbst. Diese Materialien weisen jedoch einen Kristallitschmelzpunkt auf, der höher liegt als der der Hauptkomponente, zum Beispiel bei 200° C. Dadurch wird gewährleistet, daß diese zusätzlichen Verstärkungselemente gegenüber der Hauptkomponente wärmestabil sind, also bei Schrumpftemperatur ihre Form beibehalten. Die nicht schrumpfende Komponente hingegen erweicht bei Schrumpftemperatur ohne abzufließen, so daß die durch das Schrumpfen zu bewirkende Formänderung möglich ist. Solche Werkstoffe sind zum Beispiel Polyethylen, Polybuten, Polyamid 6, Poly-4-Methylpenten 1. Die Zumischung derartiger Materialien beträgt dabei zwischen 10 und 60 Volumenprozenten, je nach geforderter zusätzlicher Festigkeit.

Für die schrumpffähige Komponente werden gemäß der Erfindung ebenfalls vollkompatible Materialien verwendet, zum Beispiel strahlenvernetztes Polyethylen.

Gemäß der Erfindung ist die schrumpffähige Komponente als Netz ausgebildet. Dieses Netz kann nun aus bereits schrumpffähigen Fadenelementen oder aus einem schrumpffähigen Gitter bestehen, wobei die einzelnen Faden- bzw. Gitterelemente der Netzmaschen in den Eckpunkten unlösbar miteinander verbunden sind. Eine solche bereits schrumpffähige Komponente ist also bereits auch geweitet, womit ihr das Formgedächtnis für das Schrumpfen eingegeben ist. Diese schrumpffähige Komponente wird entweder direkt in die nicht schrumpffähige Komponente eingebettet oder zunächst zwischen zwei Folien aus unvernetztem Polyethylen eingelegt und als Laminat in die nicht schrumpfbare Komponente eingebracht. Beide Varianten sind dann nach dem Zusammenfügen bereits als schrumpfbare Umhüllung gemäß der Erfindung zu verwenden, das heißt, bei Zuführung von Wärme schrumpft das eingebettete Netz, wobei die nicht schrumpfbare Komponente so weich wird, daß die Schrumpfung erfolgen kann.

Eine andere Variante der Erfindung besteht darin, daß die schrumpfbare Komponente in Form des Netzes in vernetzter, jedoch ungeweiteter Form eingebettet wird, wobei dies ebenfalls direkt oder als Laminat mit anderen Folien erfolgen kann. Auf diese Weise wird zunächst eine Umhüllung hergestellt, die noch nicht schrumpfbar ist, da ihr das durch Weiten einzubringende Formgedächtnis noch nicht verliehen ist. Nun kann man diese ungeweitete Form der Umhüllung insgesamt einer Weitung unterziehen und ihr das Formgedächtnis dadurch verleihen. Dies hat unter Umständen Vorteile bezüglich der Schichtdicke und der gegenseitigen Haftung zwischen den einzelnen Schichten.

Die Haftung zwischen den einzelnen Schichten der Umhüllung ist besonders innig, da insgesamt nur kompatible Materialien verwendet werden, die zum Teil eine gewisse Strahlenresistenz aufweisen, so daß die Klebefähigkeit bzw. gegenseitige Verschweißbarkeit untereinander erhalten bleibt. So lassen sich Laminate in Form eines Verbundes (Sandwich-System) aus mehreren Schichten besonders problemlos herstellen.

Die Ausbildung der schrumpfbaren Komponente in Form eines Netzes mit fester, unlösbarer Verbindung der Netzfadenelemente in den einzelnen Kreuzungspunkten der Netzmaschen gewährleistet eine gute mechanische Festigkeit, insbesondere bezüglich des Ein- bzw. Weiterreißens bei mechanischen Verletzungen der Umhüllung, wie zum Beispiel bei der Montage durch unsachgemäßes Einschneiden. Auch Einkerbungen führten zum Beispiel bei herkömmlichen Umhüllungen zu einem Ein- bzw. Weiterreißen der Umhüllung bis zur Unbrauchbarkeit. Bei einer Umhüllung gemäß der Erfindung hingegen kann eine solche Verletzung jeweils nur bis zum nächsten Kreuzungspunkt erfolgen, da ab hier wieder erhöhte Festigkeit gegeben ist, das heißt, das Einreißen wird gestoppt.

Die Schrumpffähigkeit bzw. die aktivierbaren Schrumpfkräfte lassen sich in mehrfacher Weise variieren. So ergibt sich für die Bestimmung der Schrumpfkräfte die Möglichkeit durch entsprechende Formgebung und durch die Stärkung der Netzstruktur Einfluß zu nehmen. Eine andere Möglichkeit ist dadurch gegeben, daß mehrere Lagen solcher schrumpfbaren Netze verwendet werden, die entweder direkt oder in Laminatform mit anderen Elementen eingelagert werden.

Die Erfindung beschränkt sich jedoch nicht allein auf die Verwendung von schrumpffähigen Elementen aus einem der herkömmlichen Schrumpfcompounds. So ist es auch möglich, als schrumpffähige Komponente ein elastisches Element, wie zum Beispiel ein gummielastisches Netz, zu verwenden. Ein solches Netz wird in geweitetem Zustand in einer zunächst nicht schrumpffähigen Laminatstruktur im Spannungszustand gehalten. Bei Zuführung von Wärme erweicht das nicht schrumpffähige Material und die "eingefrorenen" elastischen Kräfte bewirken eine Schrumpfung der Umhüllung. Nach dem Erkalten sind wieder stabile Verhältnisse gegeben. Hierfür geeignete Materialien sind ebenfalls Polymere, die vernetzt sind.

Die Erfindung wird nun anhand von vier Figuren näher erläutert.

Figur 1    zeigt den prinzipiellen Schichtaufbau einer Umhüllung gemäß der Erfindung.

Figur 2    zeigt die Ausbildung der schrumpfbaren Komponente in Form eines gitterförmigen Netzes.

Figur 3    zeigt die Bildung eines Netzes gemäß der Erfindung durch einzelne Netzfadenelemente, die in Abständen alternierend unlösbar zusammengefügt sind.

Figur 4    zeigt eine schrumpfbare Umhüllung als Manschette mit längsseitigen Verschlußbereichen.

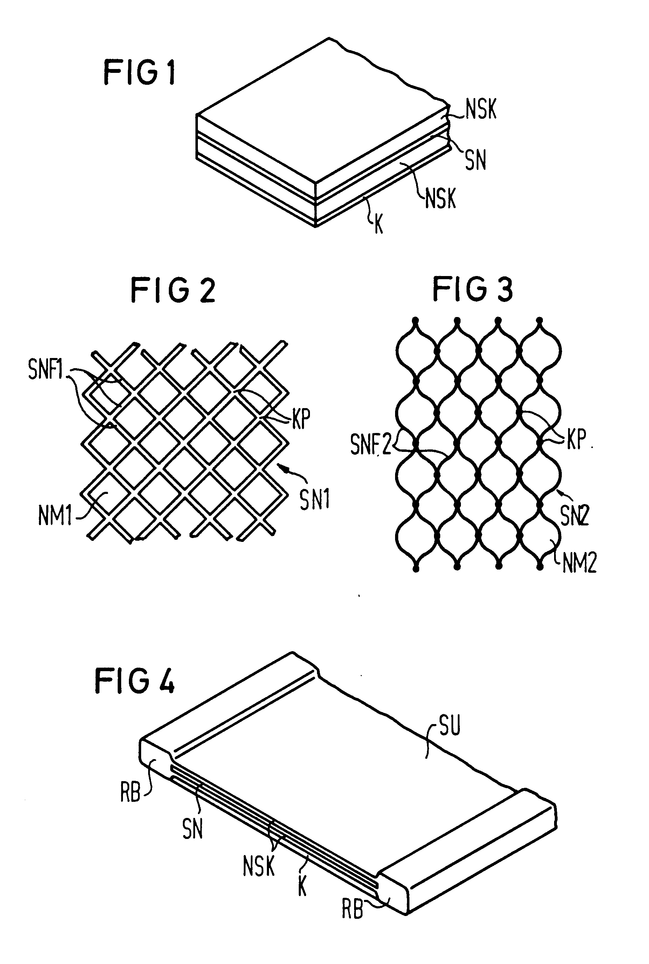

Die Figur 1 zeigt den prinzipiellen Aufbau eines Laminats für eine schrumpfbare Umhüllung gemäß der Erfindung. Hier wird deutlich, daß die schrumpffähige Komponente SN zwischen zwei nicht schrumpffähigen Komponenten NSK eingelagert ist und daß eine weitere Schicht K, zum Beispiel ein wärmeschrumpfbarer Kleber auf einer Seite aufgebracht ist. Bei Zuführung von Wärme bis zur Schrumpftemperatur der wärmeschrumpffähigen Komponente SN erweichen die nicht schrumpffähigen Komponenten NSK ohne zu schmelzen oder gar abzufließen, so daß sich die Schrumpfkräfte der schrumpffähigen Komponente SN voll entfalten können und die Umhüllung auf den umhüllten Gegenstand schrumpfen kann. Der aufgebrachte Schmelzkleber K schmilzt und ergibt die Dichtung zwischen der Umhüllung und dem umhüllten Gegenstand. Nach dem Erkalten ist eine dichte Verbindung hergestellt.

Die Figur 2 verdeutlicht ein Ausführungsbeispiel für eine schrumpffähige Komponente SN in Form eines rautenförmigen Netzes. Wie bereits beschrieben, sind die einzelnen Netzfadenelemente SNF1 als die schrumpffähigen Elemente anzusehen, die je nach Ausführungsbeispiel entweder bereits gedehnt oder auch ungedehnt in der Umhüllung eingelagert sind. Diese Netzfadenelemente SNF1 sind in den jeweiligen Kreuzungspunkten KP unlösbar miteinander verbunden, so daß ein festes Gefüge gegeben ist. Dies bewirkt, daß sich die Schrumpfkräfte der einzelnen Neztfadenelemente SNF1 gleichmäßig über die ganze Fläche verteilen. Auf diese Weise bilden sich kaum Spannungen aus, die zu ungewollter Verformung führen können. Die eigentliche Struktur der Netzmaschen NM1 ist dabei nicht ausschlaggebend; es können durchaus auch rechteckförmige, bogenförmige oder ähnlich gestaltete Grundformen gewählt werden, wobei jedoch die Fixierung in den einzelnen Kreuzungspunkten gegeben sein muß. Ein Netzgebilde nach Figur 2 kann zum Beispiel in einfacher Weise als Spritzteil in Form einer Matte hergestellt werden, die nach der Vernetzung entweder sofort oder erst im Verbund mit den anderen Schichten gedehnt und damit zur schrumpffähigen Komponente SN wird. Durch den einfachen Aufbau eines solchen schrumpffähigen Gebildes lassen sich beliebige Teile ausschneiden, die dann im Verbund mit den anderen Komponenten auch eine Schrumpfung nur in diesen Teilbereichen ergeben. Dies bedeutet, daß man Umhüllungen herstellen kann, die nur in den Anpassungsbereichen schrumpffähig sind, während die übrigen Bereiche von der Schrumpfung nicht beeinflußt werden. Eine derartige Ausbildung ist mit losen Geweben nicht möglich.

Die Figur 3 zeigt eine weitere Ausführungsform für eine schrumpffähige Komponente SN2 in Form eines bogenförmigen Netzes. Hier wird das Netz aus einzelnen Netzfadenelementen SNF2 hergestellt, die zunächst parallel verlaufend in fortlaufenden Abständen, jedoch alternierend miteinander verbunden werden. Nach dem Auseinanderziehen dieses "Parallelgebildes" in Richtung quer dazu, ergibt sich dann die in der Figur 3 gezeigte Form eines Gitters, deren einzelne Netzfadenelemente SNF2, zum Beispiel durch eine Materialverschweißung, in den "Kreuzungspunkten" KP miteinander verbunden und fixiert sind. Ein solches Netz ist besonders flexibel und läßt sich je nach Bedarf mehr oder weniger eng in die anderen Schichten einbringen, das heißt, es läßt sich hierdurch der Schrumpfungsgrad wie auch die Stärke der Schrumpfkräfte auf den gesamten Verbund gesehen in gewissen Grenzen variieren. Ähnliches läßt sich auch mit Mehrfachschichten von Netzen erreichen, da in diesen Bereichen die Schrumpfung verstärkt ist.

Die Figur 4 zeigt schließlich die wärmeschrumpfbare Umhüllung SU in Form einer wärmeschrumpfbaren Manschette gemäß der Erfindung, die aus den beschriebenen Einzelelementen aufgebaut ist. Im mittleren, schrumpffähigen Bereich der schrumpfbaren Umhüllung SU sind die beschriebenen Schichten, die schrumpffähige Komponente SN und die beiden nicht schrumpffähigen Komponenten NSK angeordnet. Ferner ist auf der später nach innen weisenden Seite der Umhüllung eine Kleberschicht K aufgebracht. Die Randbereiche RB entlang der schrumpfbaren Umhüllung SU sind als Verschlußelemente ausgebildet oder zumindest so vorbereitet, daß solche Elemente eingesetzt bzw. aufgezogen werden können. Diese Randbereiche RB müssen jedoch bei Schrumpftemperatur wärmefest sein, das heißt, sie müssen bei dieser Temperatur ihre Form beibehalten. Dies kann beispielsweise durch starke Vernetzung dieser Randbereiche RB erfolgen. Auch entsprechende wärmefeste Einlagen sind hierfür geeignet. Weiterhin kann durch eine längs verlaufende Verlängerung eines solchen Randbereiches auf der Innenseite der Manschette ein Fortsatz gebildet werden, der beim Schließen der Umhüllung den Längsspalt überbrückt und eine Abdichtung bildet. Die Randbereiche RB können im übrigen nach all den bekannten Systemen für Verschlüsse, wie zum Beispiel als Keilverschluß mit Schiene, ausgebildet werden. Dies hat jedoch keinen direkten Einfluß auf die Ausgestaltung des schrumpfbaren Teiles der Umhüllung.

## Patentansprüche

1. Wärmeschrumpfbare Umhüllung mit einer schrumpffähigen Komponente, die in einer nicht schrumpffähigen Komponente angeordnet ist,
   **dadurch gekennzeichnet,**
   daß die schrumpffähige Komponente (SK) aus einem vernetzten Polymer besteht und in Netzform (SN) ausgebildet und schließlich geweitet ist, wobei die in der aus einem Polymer bestehenden, nicht schrumpffähigen Komponente (NSK) eingelagerten Netzfadenelemente (SNF) der einzelnen Netzmaschen (NM) in den Kreuzungspunkten (KP) unlösbar miteinander verbunden sind.

2. Wärmeschrumpfbare Umhüllung nach Anspruch 1,
   **dadurch gekennzeichnet,**
   daß das schrumpffähige Netz (SN) aus rechteckförmigen Netzmaschen (NM) gebildet ist.

3. Wärmeschrumpfbare Umhüllung nach Anspruch 1,
   **dadurch gekennzeichnet,**
   daß das schrumpffähige Netz (SN) aus rautenförmigen Netzmaschen (NM) gebildet ist.

4. Wärmeschrumpfbare Umhüllung nach Anspruch 1,
   **dadurch gekennzeichnet,**
   daß nahezu kreisförmige Netzmaschen (NM2) gebildet sind.

5. Wärmeschrumpfbare Umhüllung nach einem der vorhergehenden Ansprüche,
**dadurch gekennzeichnet,**
daß das schrumpffähige Netz (SN) in Form einer Matte als Spritzteil hergestellt ist.

6. Wärmeschrumfpbare Umhüllung nach einem der Ansprüche 1 bis 4,
**dadurch gekennzeichnet,**
daß das schrumpffähige Netz (SN2) aus einzelnen parallel verlaufenden Netzfadenelementen (SNF2) dadurch gebildet ist, daß jeweils zwei parralel verlaufende Netzfadenelemente (SNF2) in Abständen voneinander in alternierender Folge zusammengeheftet sind, so daß nach dem Auseinanderziehen der Netzfadenelemente (SNF2) senkrecht zur Richtung der Netzfasenelemente (SNF2) die Netzstrucktur gebildet it.

7. Wärmeschrumpfbare Umhüllung nach einem der vorhergehenden Ansprüche,
**dadurch gekennzeichenet,**
daß das schrumpffähige Netz (SN) in einer Flächenfolie aus einer nicht schrumpffähigen Komponente (NSK) eingebettet ist.

8. Wärmeschrumpfbare Umhüllung nach einem der Ansprüch 1 bis 6,
**dadurch gekennzeichnet,**
daß das schrumpffähige Netz (SN) zwischen zwei Flächenfolien aus nicht schrumpfbaren Komponenten (NSK) eingebettet ist.

9. Wärmeschrumpfbare Umhüllung nach einem der vorhergehenden Ansprüche,
**dadurch gekennzeichnet,**
daß zusätzliche Schichten, insbesondere eine Kleberschicht (K) aufgebracht ist.

10. Wärmeschrumpfbare Umhüllung nach einem der vorhergehenden Ansprüche,
**dadurch gekennzeichnet,**
daß sie (SU) entlang zweier paralleler Längsränder wärmestabile Randbereiche (RB) aufweist, die als Verschlußelemente ausgebildet sind.

11. Wärmeschrumpfbare Umhüllung nach einem der Ansprüche 1 bis 9,
**dadurch gekennzeichnet,**
daß sie (SU) entlang zweier paralleler Längsränder wärmestabile Randbereiche (RB) aufweist, in welche Verschlußelemente einsetzbar sind.

12. Wärmeschrumpfbare Umhüllung nach einem der vorhergehenden Ansprüche,
**dadurch gekennzeichnet,**
daß das Polymer der nicht schrumpffähige Komponente (NSK) vernetzt ist.

13. Wärmeschrumpfbare Umhüllung nach einem der Ansprüche 1 bis 11,
**dadurch gekennzeichnet,**
daß das Polymer der nicht schrumpffähigen Komponente (NSK) nicht vernetzt ist.

14. Wärmeschrumpfbare Umhüllung nach einem der vorhergehenden Ansprüch,
**dadurch gekennzeichnet,**
daß das schrumpffähige Netz (SN) aus einem Kunststoffcompound besteht mit Polyätheresterelastomer als nicht strahlenvernetzbarer Hauptkomponente.

15. Wärmeschrumpfbare Umhüllung nach Anspruch 14,
**dadurch gekennzeichnet,**
daß das schrumpffähige Netz (SN) als strahlenvernetzbare Komponente Ethylenvinylacetat enthält.

16. Wärmeschrumpfbare Umhüllung nach einem der vorhergehenden Ansprüche,
**dadruch gekennzeichnet,**
daß eine zusätzlche Faserverstärkung aus einem der Hauptkomponente chemisch ähnlich aufgebauten thermoplastischen Werkstoff mit einem Kristallitschmelzpunkt von $\geq 220°$ C eingebracht ist, wie zum Beispiel Polyethylenterephthalat, Polybutylenterephthalat, Polyamid 6 oder Poly-4-Metylpenten 1.

17. Wärmeschrumpfbare Umhüllung nach Anspruch 16,
**dadurch gekennzeichnet,**
daß die Beimischung der zusätzlichen Faserverstärkung 10 bis 60 Volumenprozente beträgt.

18. Wärmeschrumpfbare Umhüllung nach einem der vorhergehenden Ansprüche,
**dadurch gekennzeichnet,**
daß sie (SU) in Sandwich-Struktur durch Mehrschichtlaminierung aufgebaut ist.

19. Wärmeschrumpfbare Umhüllung nach einem der vorhergehenden Ansprüche,
**dadurch gekennzeichnet,**
daß ihre Rückschrumpftemperatur im Temperaturbereich von 90 bis 150° C liegt und unterhalb des Kristallitschmelzpunktes der Fasern nach Anspruch 16 liegt.

20. Wärmeschrumpfbare Umhüllung nach einem der vorhergehenden Ansprüche,
**dadurch gekennzeichnet,**
daß mehrere schrumpffähige Komponenten (SK) zumindest in Teilbereichen übereinander angeordnet sind.

21. Wärmeschrumpfbare Umhüllung nach einem der vorhergehenden Ansprüche,
**dadurch gekennzeichnet,**
daß als schrumpffähige Komponente (SK) ein dauerelastisches Material, vorzugsweise Gummi, verwendet ist, das in gedehntem Zustand in einer nicht schrumpffähigen Komponente eingelagert ist.

22. Wärmeschrumpfbare Umhüllung nach einem der vorhergehenden Ansprüche,
**dadurch gekennzeichnet,**
daß die schrumpffähige Komponente (SK) nur in Teilbereichen angeordnet ist.

23. Verfahren zur Herstellung der wärmeschrumpfbaren Umhüllung nach einem der vorhergehenden Ansprüche,
**dadurch gekennzeichnet,**
daß die schrumpffähige Komponente (SK) in Form des ungeweiteten Netzes (SN) in die nicht schrumpffähige Komponente (NSK) eingebracht wird und daß dann die Weitung der gesamten Umhüllung (SU) vorgenommen wird.

24. Verfahren zur Herstellung der wärmeschrumpfaren Umhüllung nach einem der Ansprüche 1 bis 9,
**dadurch gekennzeichnet,**
daß die schrumpffähige Komponente (SK) in Form des geweiteten Netzes (SN) in die nicht schrumpffähige Komponente eingebracht wird.

## Claims

1. Heat-shrinkable jacket having a shrinkable component which is arranged in a non-shrinkable component, characterised in that the shrinkable component (SK) consists of a crosslinked polymer and is made in network form (SN) and finally widened, the network filament elements (SNF) of the individual network meshes (NM) being incorporated in the non-shrinkable component (NSK) consisting of a polymer and undetachably connected to one another at the crossing points (KP).

2. Heat-shrinkable jacket according to Claim 1, characterised in that the shrinkable network (SN) is formed by rectangular network meshes (NM).

3. Heat-shrinkable jacket according to Claim 1, characterised in that the shrinkable network (SN) is formed by rhomboid network meshes (NM).

4. Heat-shrinkable jacket according to Claim 1, characterised in that virtually circular network meshes (NM2) are formed.

5. Heat-shrinkable jacket according to one of the preceding claims, characterised in that the shrinkable network (SN) is produced in the form of a mat as an injection moulding.

6. Heat-shrinkable jacket according to one of Claims 1 to 4, characterised in that the shrinkable network (SN2) is formed from individual parallel-running network filament elements (SNF2) by in each case two parallel-running network filament elements (SNF2) being fixed together at intervals from one another in alternating sequence, so that after the network filament elements (SNF2) have been drawn apart perpendicularly to the direction of the network filament elements (SNF2) the network structure is formed.

7. Heat-shrinkable jacket according to one of the preceding claims, characterised in that the shrinkable network (SN) is embedded in a sheet-like film of a non-shrinkable component (NSK).

8. Heat-shrinkable jacket according to one of Claims 1 to 6, characterised in that the shrinkable network (SN) is embedded between two sheet-like films of non-shrinkable components (NSK).

9. Heat-shrinkable jacket according to one of the preceding claims, characterised in that additional layers, in particular an adhesive layer (K), are applied.

10. Heat-shrinkable jacket according to one of the preceding claims, characterised in that it (SU) has along two parallel longitudinal edges thermally stable edge regions (RB), which are designed as sealing elements.

11. Heat-shrinkable jacket according to one of Claims 1 to 9, characterised in that it (SU) has along two parallel longitudinal edges thermally stable edge regions (RB), into which sealing elements can be inserted.

12. Heat-shrinkable jacket according to one of the preceding claims, characterised in that the polymer of the non-shrinkable component (NSK) is crosslinked.

13. Heat-shrinkable jacket according to one of Claims 1 to 11, characterised in that the polymer of the non-shrinkable component (NSK) is not crosslinked.

14. Heat-shrinkable jacket according to one of the preceding claims, characterised in that the shrinkable network (SN) consists of a synthetic compound with polyether ester elastomer as the non-radiation-crosslinkable main component.

15. Heat-shrinkable jacket according to Claim 14, characterised in that the shrinkable network (SN) contains ethylene vinyl acetate as the radiation-crosslinkable component.

16. Heat-shrinkable jacket according to one of the preceding claims, characterised in that an additional fibre reinforcement of a thermoplastic material having a chemical structure similar to that of the main component and a crystalline melting point of $\geq 200 \degree C$ is introduced, such as for example polyethylene terephthalate, polybutyleneterephthalate, polyamide 6 or poly-4-methylpentene 1.

17. Heat-shrinkable jacket according to Claim 16, characterised in that the admixture of the additional fibre reinforcement amounts to 10 to 60 per cent by volume.

18. Heat-shrinkable jacket according to one of the preceding claims, characterised in that it (SU) is constructed as a sandwich structure by multi-layer lamination.

19. Heat-shrinkable jacket according to one of the preceding claims, characterised in that its recovery temperature lies in the temperature range from 90 to $150 \degree C$ and lies below the crystalline melting point of the fibres according to Claim 16.

20. Heat-shrinkable jacket according to one of the preceding claims, characterised in that a plurality of shrinkable components (SK) are arranged one above the other, at least in subregions.

21. Heat-shrinkable jacket according to one of the preceding claims, characterised in that a permanently flexible material, preferably rubber, is used as shrinkable component (SK) and is incorporated in the stretched state in a non-shrinkable component.

22. Heat-shrinkable jacket according to one of the preceding claims, characterised in that the shrinkable component (SK) is arranged only in sub-regions.

23. Process for producing the heat-shrinkable jacket according to one of the preceding claims, characterised in that the shrinkable component (SK) is introduced in the form of the unwidened network (SN) into the non-shrinkable component (NSK) and in that then the widening of the entire jacket (SU) is performed.

24. Process for producing the heat-shrinkable jacket according to one of Claims 1 to 9, characterised in that the shrinkable component (SK) is introduced in the form of the widened network (SN) into the non-shrinkable component.

**Revendications**

1. Gaine thermorétractable, comprenant un constituant susceptible de se rétracter qui est disposé dans un constituant qui n'est pas susceptible de se rétracter,
   caractérisée,
   en ce que le constituant (SK), susceptible de se rétracter, est en polymère réticulé et est sous la forme d'un filet (SN) et est enfin étiré, les brins de fil (SNF) des mailles individuelles (NM) du filet insérés dans le constituant non susceptible de se rétracter (NSK) en un polymère étant reliés entre eux de manière indétachable aux points de croisement (KP).

2. Gaine thermorétractable suivant la revendication 1,
   caractérisée,
   en ce que le filet susceptible de se rétracter (SN) est formé de mailles de filet (NM) rectangulaires.

3. Gaine thermorétractable suivant la revendication 1,
   caractérisée,
   en ce que le filet susceptible de se rétracter (SM) est formé de mailles de filet (NM) en forme de losanges.

4. Gaine thermorétractable suivant la revendication 1,
   caractérisée,
   en ce qu'il est formé des mailles de filet (NM2) presque circulaires.

5. Gaine thermorétractable suivant l'une des revendications précédentes,

caractérisée,

en ce que le filet susceptible de se rétracter (SN) est fabriqué sous la forme d'une nappe en tant que pièce moulée par injection.

6. Gaine thermorétractable suivant l'une des revendications 1 à 4,

caractérisée,

en ce que le filet susceptible de se rétracter (SN2) est constitué d'éléments de brins de filet (SNF2) s'étendant parallèlement, par le fait que deux éléments de brins de filet (SNF2) s'étendant parallèlement sont reliés successivement en alternance à distance les uns des autres, de manière à former, en étirant les éléments de brins de filet (SNF2) perpendiculairement à la direction des éléments de brins de filet (SNF2), la structure en filet.

7. Gaine thermorétractable suivant l'une des revendications précédentes,

caractérisée,

en ce que le filet susceptible de se rétracter (SN) est incorporé dans une feuille plane et en un constituant non susceptible de se rétracter (NSK).

8. Gaine thermorétractable suivant l'une des revendications 1 à 6,

caractérisée,

en ce que le filet susceptible de se rétracter (SN) est incorporé entre deux feuilles planes en un constituant non rétractable (NSK).

9. Gaine thermorétractable suivant l'une des revendications précédentes,

caractérisée,

en ce que sont déposées des couches supplémentaires, notamment une couche de colle (K).

10. Gaine thermorétractable suivant l'une des revendications précédentes,

caractérisée,

en ce qu'elle (SU) comporte, le long de deux bords longitudinaux parallèles, des parties marginales (RB) stables à la chaleur et constituées en éléments de fermeture.

11. Gaine thermorétractable suivant l'une des revendications 1 à 9,

caractérisée,

en ce qu'elle (SU) comporte, le long de deux bords longitudinaux parallèles, des parties marginales (RB) stables à la chaleur et dans lesquelles peuvent être montés des éléments de fermeture.

12. Gaine thermorétractable suivant l'une des revendications précédentes,

caractérisée,

en ce que le polymère du constituant non susceptible de se rétracter (NSK) est réticulé.

13. Gaine thermorétractable suivant l'une des revendications 1 à 11,

caractérisée,

en ce que le polymère du constituant non susceptible de se rétracter (NSK) n'est pas réticulé.

14. Gaine thermorétractable suivant l'une des revendications précédentes,

caractérisée,

en ce le filet susceptible de se rétracter (SN) est en un composite de matière plastique comprenant un polyétheroxyde ester élastomère en tant que constituant principal non réticulable par un rayonnement.

15. Gaine thermorétractable suivant la revendication 14,

caractérisée,

en ce que le filet (SN) susceptible de se rétracter contient du vinylacétate d'éthylène comme constituant réticulable par un rayonnement.

16. Gaine thermorétractable suivant l'une des revendications précédentes,

caractérisée,

en ce qu'il est inséré un renfort fibreux supplémentaire en un matériau thermoplastique de structure chimique analogue à l'un des constituants principaux, et ayant un point de fusion des cristallites supérieur ou égal à 200°C, comme par exemple du poly-(téréphtalate d'éthylène), du poly(téréphtalate de butylène), du polyamide 6 ou du poly-4-méthylpentène-1.

17. Gaine thermorétractable suivant la revendication 16,

caractérisée,

en ce que le renfort fibreux supplémentaire représente de 10 à 60 % en volume.

18. Gaine thermorétractable suivant l'une des revendications précédentes,

caractérisée,

en ce qu'elle (SU) a une structure stratifiée par dépôt de plusieurs couches.

19. Gaine thermorétractable suivant l'une des revendications précédentes,

caractérisée,

en ce que sa température de retrait est comprise entre 90 et 150°C et est inférieure au point de fusion des cristallites des fibres suivant la revendication 16.

20. Gaine thermorétractable suivant l'une des revendications précédentes,

caractérisée,

en ce que plusieurs constituants, susceptibles de se rétracter (SK), sont superposés au moins dans certaines parties.

21. Gaine thermorétractable suivant l'une des revendications précédentes,

caractérisée,

en ce qu'il est utilisé, comme constituants susceptibles de se rétracter (SK), un matériau à élasticité permanente, de préférence du caoutchouc, qui est inséré à l'état tendu dans un constituant non susceptible de se rétracter.

22. Gaine thermorétractable suivant l'une des revendications précédentes,

caractérisée,

en ce que le constituant susceptible de se rétracter (SK) n'est prévu que dans certaines parties.

23. Procédé de fabrication de la gaine thermorétractable suivant l'une des revendications précédentes,

caractérisé,

en ce qu'il consiste,

à insérer le constituant susceptible de se rétracter (SK) sous la forme du filet (SN) non étiré dans le constituant non susceptible de se rétracter (NSK), et à effectuer ensuite l'étirage de l'ensemble de la gaine (SU).

24. Procédé de fabrication de la gaine thermorétractable suivant l'une des revendications 1 à 9,

caractérisé,

en ce qu'il consiste à insérer le constituant susceptible de se rétracter (SK) sous la forme du filet (SN) étiré, dans le constituant non susceptible de se rétracter.

FIG 1

NSK
SN
NSK
K

FIG 2

SNF1
KP
SN1
NM1

FIG 3

SNF2
KP.
SN2
NM2

FIG 4

SU
RB
SN
NSK
K
RB